# EUROPÄISCHE PATENTANMELDUNG

(11) **EP 2 388 121 A2**
(43) Veröffentlichungstag der Anmeldung: **23.11.2011**
(21) Anmeldenummer: 11075113.8
(22) Anmeldetag: 19.05.2011
(51) Int. Cl.: B29C 44/04, B29C 59/16

(54) **Verfahren zum Herstellen eines Dekors auf einer Sichtseite eines Kunststoffteils sowie Kunststoffteil mit einem Dekor**

(30) Priorität: 19.05.2010 DE 102010021120
(71) Anmelder: Faurecia Innenraum Systeme GmbH, 76767 Hagenbach (DE)
(72) Erfinder: Angebault, Thomas, 60230 Chambly (FR); Habert, Cédric, 60510 Le Fay Saint (FR); Perinet, Denis, 67000 Strasbourg (FR); Musy, Maxime, 25160 Labergement Sainte Marie (FR)
(74) Vertreter: Pfenning, Meinig & Partner GbR

(57) **Zusammenfassung**

Die Erfindung betrifft ein Verfahren zum Herstellen eines Dekors auf einer Sichtseite eines Kunststoffteils und vorzugsweise eines Innenverkleidungsteils eines Fahrzeugs, sowie ein derart mit einem Dekor versehenes Kunststoffteil. Dadurch, dass zumindest Bereiche einer Sichtseite eines zuvor bereitgestellten Kunststoffteils mit einem Laserstrahl bestrahlt werden, wobei Parameter des Laserstrahls und des Kunststoffs so gewählt werden, dass der Kunststoff in den bestrahlten Bereichen aufschäumt, so dass mindestens eine Erhöhung auf der Sichtseite des Kunststoffteils gebildet wird, kann ein optisch hochwertiges aus Erhöhungen bestehendes Dekor auf einfache Weise hergestellt werden.

## Beschreibung

Die Erfindung betrifft ein Verfahren zum Herstellen eines Dekors auf einer Sichtseite eines Kunststoffteils und vorzugsweise auf einer Sichtseite eines Innenverkleidungsteils eines Fahrzeugs. Außerdem betrifft die Erfindung ein Kunststoffteil, insbesondere ein Fahrzeuginnenraumverkleidungsteil, mit einem aufgebrachten Dekor.

Nach dem Stand der Technik sind bereits Verfahren zur Aufbringung von Dekors auf Oberflächen von Kunststoffteilen bekannt. Beispielsweise ist es bekannt, Kunststoffteile mit einem Laser zu bestrahlen, um Vertiefungen in eine Oberfläche der Kunststoffteile einzubringen. Oft ist es jedoch aus ästhetischen Gründen wünschenswert, Erhöhungen aufzubringen statt Vertiefungen einzubringen. Dies ist bis jetzt lediglich dadurch möglich, dass Vertiefungen in eine zur Herstellung des Kunststoffteils verwendete Form eingebracht sind. Dies hat jedoch den Nachteil, dass beim Entnehmen des Kunststoffteils aus der Form häufig Kunststoff in den Vertiefungen der Form verbleibt. Dies führt zum einen dazu, dass Erhöhungen auf dem Kunststoffteil nicht wie erwünscht ausgebildet werden, und zum anderen dazu, dass ein Aufwand zur Reinigung der Form deutlich erhöht ist.

Aufgabe der Erfindung ist es daher, ein Verfahren zu ermöglichen, bei dem auf einfache und zuverlässige Weise Erhöhungen auf ein Dekorteil aufgebracht werden. Eine weitere Aufgabe der Erfindung ist es, ein einfach herzustellendes Dekorteil mit aufgebrachten Erhöhungen zu ermöglichen.

Diese Aufgaben werden durch ein Verfahren mit den Merkmalen des Anspruchs 1 sowie ein Kunststoffteil mit den Merkmalen des Anspruchs 7 gelöst. Vorteilhafte Weiterbildungen und Ausgestaltungen ergeben sich mit den Merkmalen der Unteransprüche.

Dadurch, dass eine Sichtseite eines zuvor bereitgestellten zumindest teilweise aus Kunststoff bestehenden Teils mit einem Laserstrahl bestrahlt wird, wobei Parameter des Laserstrahls und des Kunststoffs so gewählt werden, dass der Kunststoff in den bestrahlten Bereichen aufschäumt, so dass mindestens eine Erhöhung auf der Sichtseite des Kunststoffteils gebildet wird, ist es auf einfache und zuverlässige Art und Weise möglich, Erhöhungen auf ein Kunststoffteil aufzubringen.

Dadurch, dass nach dem Bestrahlen eine Lackschicht zumindest auf Teilen der Sichtseite aufgebracht wird, ist nicht mehr sichtbar, dass die Erhöhungen aus aufgeschäumtem Kunststoff bestehen. Sollte eine Oberfläche im Bereich der Erhöhungen aufgrund von oberflächlich angeordneten aufgeplatzten Schaumbläschen nicht hinreichend kontinuierlich und somit nicht optisch ansprechend sein, wird durch die Lackschicht eine glatte Oberfläche in diesen Bereichen ermöglicht. Somit ist für einen Betrachter lediglich wahrzunehmen, dass Erhöhungen eingebracht sind, nicht jedoch, dass diese durch Aufschäumen entstanden sind. Um die Beschaffenheit der Erhöhungen aus Schaum zuverlässig zu verbergen, ist die Lackschicht aus einem deckenden Lack, d.h. einem Lack der für das gesamte sichtbare Spektrum des Lichts undurchlässig ist, ausgebildet. Die Teile der Sichtseite, auf die die Lackschicht aufgebracht wird, umfassen des Weiteren zumindest die mit dem Laser bestrahlten Bereiche.

In einer weiteren vorteilhaften Ausführungsform ist die Erhöhung linienförmig ausgebildet. Besonders bevorzugt können mehrere Erhöhungen aufgebracht sein, die zusammen ein Linienmuster bilden.

In einer weiteren vorteilhaften Ausführungsform ist eine Wellenlänge des Laserstrahls größer als 380 nm und besonders bevorzugt größer als 780 nm. Die Anmelderin hat festgestellt, dass mit üblichen Intensitäten von UV-Lasern zumeist lediglich Verfärbungen erzielt werden können. Daher ist eine Wellenlänge des Lasers bevorzugt langwelliger. Überraschenderweise hat die Anmelderin festgestellt, dass sich insbesondere IR-Strahlung zum Aufschäumen des Kunststoffs eignet. Als besonders gut geeignet haben sich Wellenlängen zwischen 1000 nm und 1100 nm erwiesen.

In einer besonders vorteilhaften Ausführungsform beträgt die Wellenlänge des Laserstrahls 1064 nm. In dieser Ausführungsform wird als Laser ein Faserlaser oder Nd:YAG-Laser verwendet. Faserlaser und Nd:YAG-Laser zeichnen sich durch niedrige Kosten und eine hohe Zuverlässigkeit aus. Außerdem wurde festgestellt, dass eine Wellenlänge von 1064 nm besonders gut zum Aufschäumen des Kunststoffs geeignet ist.

Es hat sich als vorteilhaft erwiesen, den Laser gepulst zu betreiben, wobei eine Frequenz der Pulsausgabe zwischen 2 und 100 Hz besonders geeignet ist. Ebenso ist das Verfahren jedoch auch bei cw(coninuous wave)-Betrieb des Lasers möglich. Eine Leistung des Lasers beträgt vorzugsweise zwischen 2 und 50 Watt.

Vorteilhaft ist es, den Laserstrahl beim Bestrahlen des Kunststoffteils mit einer Geschwindigkeit zwischen 100 und 3000 mm/s über das Kunststoffteil zu bewegen. Ein Fokus des Laserstrahls kann dabei genau auf der Oberfläche des Kunststoffteils positioniert sein. Ebenso ist es jedoch möglich, den Fokus geringfügig vor oder hinter der Oberfläche des Kunststoffteils vorzusehen.

In einer besonders bevorzugten Ausführungsform wird auch in der Mitte von Auftreffpunkten, an denen der Laserstrahl auf die Sichtseite des Kunststoffteils auftrifft, eine Erhöhung ausgebildet. Eine Intensität des Laserstrahls ist also bevorzugt über den kompletten Streifquerschnitt hinreichend klein, so dass ein Entstehen einer Erhöhung durch das Aufschäumen des Kunststoffs gegenüber einem Materialabtrag durch den Laser überwiegt. Bevorzugt findet überhaupt kein Materialabtrag durch den Laser statt.

Besonders bevorzugt weist die Erhöhung in der Mitte von Auftreffpunkten des Laserstrahls eine maximale Höhe auf. Durch gezieltes Verändern einer Intensitätsverteilung des Laserstrahls auf der Sichtseite des Kunststoffteils ist es zudem möglich, nahezu beliebig geformte Erhöhungen zu erreichen.

Ein erfindungsgemäßes Kunststoffteil, welches insbesondere als Fahrzeuginnenverkleidungsteil ausgebildet sein kann, beinhaltet eine zumindest teilweise aus Kunststoff bestehende Sichtseite. Auf der Sichtseite ist zumindest eine Erhöhung aufgebracht, die aus dem gleichen Kunststoff wie ein die Erhöhung zumindest teilweise umgebender Bereich der Sichtseite besteht. Der Kunststoff ist im Bereich der Erhöhung aufgeschäumt. Ein derartig ausgebildetes Kunststoffteil weist mindestens eine optisch vorteilhafte Erhöhung auf und ist trotzdem einfach und zuverlässig herstellbar.

In einer vorteilhaften Ausführungsform wird als Kunststoff Acrylnitril, Butadienstyren oder Polycarbonat verwendet. Diese haben sich überraschenderweise als besonders geeignet zum Aufschäumen durch einen Laser erwiesen.

In einer weiteren vorteilhaften Ausführungsform ist eine Dichte des Kunststoffs im Bereich der Erhöhungen gegenüber einer Dichte des Kunststoffs in dem die Erhöhungen zumindest teilweise umgebenden Bereich verringert.

In einer weiteren vorteilhaften Ausführungsform der Erfindung beträgt ein Median einer Größe von Schaumbläschen des aufgeschäumten Kunststoffs zwischen 10 µm und 100 µm. Durch Schaumbläschen in diesem Größenbereich kann ein hinreichender Volumenzuwachs zur Ausbildung der Erhöhungen erreicht werden, wobei die Schaumbläschen hinreichend klein sind, um eine ausreichend glatte Oberfläche zu ermöglichen.

Vorteilhafte Ausführungsbeispiele der Erfindung werden anhand der folgenden Figuren erläutert. Es zeigen:
- Fign. 1a/1b: Verfahrensschritte eines erfindungsgemäßen Verfahrens,
- Fig. 2: eine vorteilhafte Ausführungsform eines erfindungsgemäßen Kunststoffteils und
- Fig. 3: eine weitere vorteilhafte Ausführungsform eines erfindungsgemäßen Kunststoffteils.

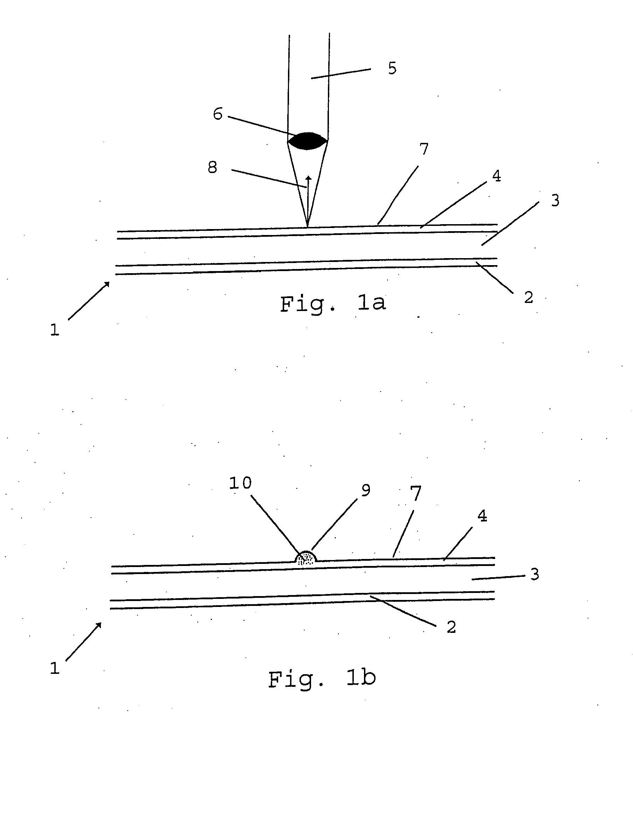

In Fig. la ist ein Kunststoffteil 1 gezeigt, welches aus einem Träger 2, einer Zwischenschicht 3 sowie einer Dekorschicht 4 besteht. Eine Sichtseite 7 des Kunststoffteils 1 wird mit einem Laserstrahl 5, der durch ein Fokussierungselement 6 auf die Sichtseite 7 des Kunststoffteils 1 fokussiert wird, bestrahlt. Hierdurch schäumt der Kunststoff im bestrahlten Bereich auf und expandiert in die zur Sichtseite orthogonale Richtung 8. Hierdurch entstehen, wie in Fig. 1b zu erkennen, Erhöhungen 9. Der Kunststoff im Bereich der Erhöhungen ist aufgeschäumt und weist Schaumblasen 10 auf. Hierdurch ist in diesem Ausführungsbeispiel eine Dichte des Kunststoffs im Bereich der Erhöhungen gegenüber einer Dichte des Kunststoffs in dem die Erhöhungen umgebenden Bereich reduziert.

In diesem Ausführungsbeispiel ist eine Höhe der Erhöhungen in der Mitte des Auftreffpunktes des Laserstrahls maximal. Dies kommt daher, dass ein Materialabtrag durch den Laserstrahl 5 nicht oder nur im vernachlässigbaren Maße stattfindet. Hierdurch wir die Erhöhung an einem Ort maximaler Einstrahlintensität am stärksten ausgebildet. In diesem Ausführungsbeispiel wurde zur Erzeugung des Laserstrahls ein Faserlaser verwendet, welcher die Sichtseite 7 des Kunststoffteils 1 mit Laserstrahlung mit einer Wellenlänge von 1064 nm bestrahlt.

Ein Median einer Größe von Schaumbläschen im Bereich der Erhöhungen beträgt in diesem Ausführungsbeispiel zwischen 10 µm und 100 µm. Um einen nachteiligen Einfluss einer durch aufgeplatzte Schaumbläschen erhöhten Rauigkeit der Oberfläche auf den optischen Gesamteindruck des Kunststoffteils 1 zu vermeiden, wird auf die Sichtseite 7 des Kunststoffteils 1 in diesem Ausführungsbeispiel eine nicht dargestellte Lackschicht aufgebracht.

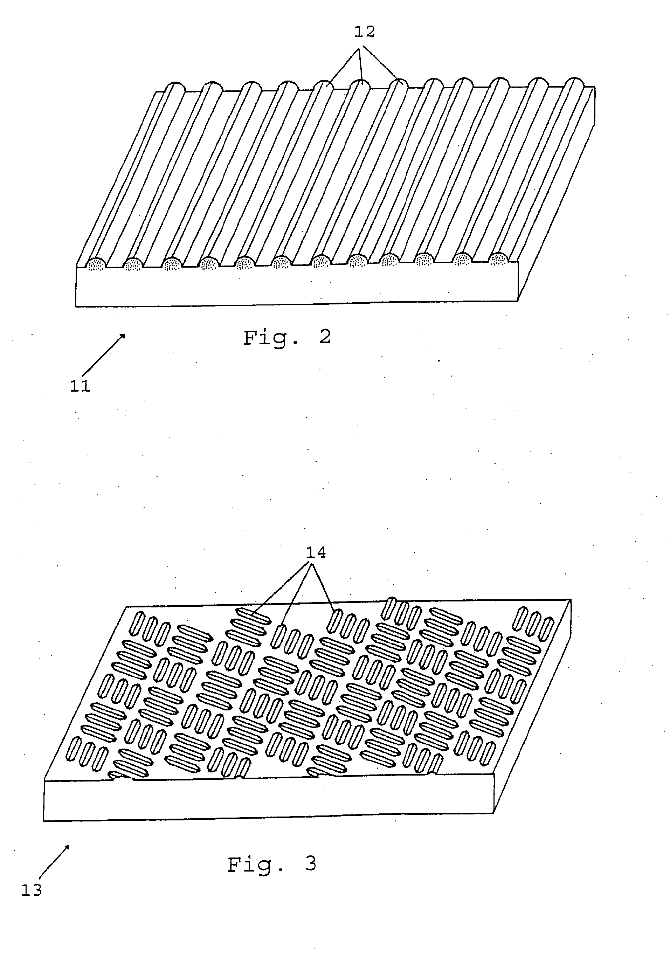

In Fig. 2 ist ein Ausführungsbeispiel eines fertigen Kunststoffteils 11 dargestellt. In diesem Ausführungsbeispiel ist das Kunststoffteil 11 einstückig und nicht mit einem Schichtaufbau wie im ersten Ausführungsbeispiel ausgebildet. Selbstverständlich wäre eine Ausbildung mit einem Schichtaufbau, beispielsweise aus einem Träger, einer Zwischenschicht und einer Dekorschicht, ebenso möglich. In diesem Ausführungsbeispiel sind mehrere linienförmig ausgebildete Erhöhungen 12 aufgebracht, die zusammen ein Linienmuster bilden.

Eine weitere Ausführungsform der Erfindung ist in Fig. 3 dargestellt. Die in Fig. 3 dargestellte Ausführungsform unterscheidet sich von der in Fig. 2 dargestellten Ausführungsform lediglich in der Formung des Musters. In diesem Ausführungsbeispiel sind auf das Kunststoffteil 13 mehrere, ein Karomuster bildende linienförmige Erhöhungen 14 aufgebracht. Selbstverständlich sind auch nahezu beliebige andere Ausgestaltungen von Erhöhungen möglich.

In den vorliegenden Ausführungsbeispielen wurde als Kunststoff Acrylnitril, Butadienstyren oder Polycarbonat verwendet, da festgestellt wurde, dass bei diesen Kunststoffen ein Aufschäumen besonders gut möglich ist. Selbstverständlich ist eine Anwendung des erfindungsgemäßen Verfahrens auch bei einer Vielzahl von anderen Kunststoffen möglich.

Eine Anwendung der Erfindung bietet sich insbesondere bei als Innenverkleidungsteilen von Fahrzeugen ausgebildeten Kunststoffteilen an, da diese in großen Stückzahlen gefertigt werden, so dass Vorteile des erfindungsgemäßen Verfahrens wie beispielsweise eine hohe Zuverlässigkeit und gute Automatisierbarkeit besonders gut zum Tragen kommen.

### Bezugszeichenliste:

- 1: Kunststoffteil
- 2: Träger
- 3: Zwischenschicht
- 4: Dekorschicht
- 5: Laserstrahl
- 6: Fokussierungselement
- 7: Sichtseite
- 8: Richtung des Aufschäumens
- 9: Erhöhung
- 10: Schaumbläschen
- 11: Weiteres Kunststoffteil
- 12: Erhöhungen
- 13: Weiteres Kunststoffteil
- 14: Erhöhungen

## Patentansprüche

1. Verfahren zum Herstellen eines Dekors auf einer Sichtseite eines Kunststoffteils, vorzugsweise eines Innenverkleidungsteils eines Fahrzeugs, mit den Schritten
- Bereitstellen eines Kunststoffteils, welches zumindest teilweise aus Kunststoff besteht und
- Bestrahlen von zumindest Bereichen der Sichtseite des Kunststoffteils mit einem Laserstrahl, wobei Parameter des Laserstrahls und des Kunststoffs so gewählt werden, dass der Kunststoff in den bestrahlten Bereichen aufschäumt, so dass mindestens eine Erhöhung auf der Sichtseite des Kunststoffteils gebildet wird,
- nachfolgendes Aufbringen einer Lackschicht auf zumindest Teilen der Sichtseite.

2. Verfahren nach einem der vorherigen Ansprüche, **dadurch gekennzeichnet, dass** die Erhöhung linienförmig ausgebildet ist, wobei bevorzugt mehrere Erhöhungen gebildet werden, die zusammen ein Linienmuster bilden.

3. Verfahren nach einem der vorherigen Ansprüche, **dadurch gekennzeichnet, dass** eine Wellenlänge des Laserstrahls größer als 380 nm und vorzugsweise größer als 780 nm ist und besonders vorzugsweise zwischen 1000 nm und 1100 nm beträgt.

4. Verfahren nach Anspruch 3, **dadurch gekennzeichnet, dass** die Wellenlänge des Laserstrahls 1064 nm beträgt und als Laser zur Erzeugung des Laserstrahls ein Faserlaser oder Nd:YAG-Laser verwendet wird.

5. Verfahren nach einem der vorherigen Ansprüche, **dadurch gekennzeichnet, dass** eine maximale Höhe der Erhöhungen in der Mitte von Auftreffpunkten des Laserstrahls ausgebildet wird.

6. Kunststoffteil, insbesondere Fahrzeuginnenverkleidungsteil, mit einer Sichtseite, die zumindest teilweise aus Kunststoff besteht, wobei mindestens eine Erhöhung auf der Sichtseite angeordnet ist, **dadurch gekennzeichnet, dass** die Erhöhung aus dem gleichen Kunststoff wie ein die Erhöhung zumindest teilweise umgebender Bereich der Sichtseite besteht, wobei der Kunststoff im Bereich der Erhöhung aufgeschäumt ist und wobei auf zumindest Teilen der Sichtseite des Fahrzeuginnenverkleidungsteils eine Lackschicht aufgebracht ist.

7. Kunststoffteil nach Anspruch 6, **dadurch gekennzeichnet, dass** als Kunststoff Akrylnitril, Butadienstyren oder Polycarbonat verwendet wird.

8. Kunststoffteil nach einem der Ansprüche 6 oder 7, **dadurch gekennzeichnet, dass** eine Dichte des Kunststoffs im Bereich der Erhöhungen gegenüber einer Dichte des Kunststoffs in dem die Erhöhungen zumindest teilweise umgebenden Bereich verringert ist.

9. Kunststoffteil nach einem der Ansprüche 6 bis 8, **dadurch gekennzeichnet, dass** ein Median einer Größe von Schaumblässchen im Bereich der Erhöhungen zwischen 10 µm und 100 µm, vorzugsweise zwischen 30 µm und 70 µm und besonders vorzugsweise zwischen 40 µm und 60 µm beträgt.
